# EUROPEAN PATENT SPECIFICATION

(11) **EP 3 432 999 B1**
(45) Date of publication and mention of the grant of the patent: **10.04.2024**
(21) Application number: 17718139.3
(22) Date of filing: 24.03.2017
(51) Int. Cl.: B01D 17/02, B01D 19/00, B01D 21/26, B04C 3/00, B04C 3/06, B04C 9/00, B01D 21/00, B01D 21/24, F24D 19/08

(54) **SEPARATOR DEVICE**
TRENNVORRICHTUNG
DISPOSITIF DE SÉPARATION

(30) Priority: 24.03.2016 NL 2016486
(43) Date of publication of application: 30.01.2019
(73) Proprietor: Spiro Enterprises B.V., 5845 EM Sint Anthonis (NL)
(72) Inventor: LAMERS, Antonius Gerardus Wilhelmus Maria, 5845 EM Sint Anthonis (NL)
(74) Representative: V.O.
(86) International application number: PCT/NL2017/050189
(87) International publication number: WO 2017/164745

(56) References cited:
- EP-A1- 0 825 896
- EP-A1- 2 445 603
- WO-A2-2008/072087
- US-A- 4 179 273
- US-A1- 2013 319 918

## Description

### FIELD OF THE INVENTION

The invention relates to a separator device for separating a light fraction and/or a heavy fraction from a liquid flow. More in particular, the invention relates to separating gas bubbles and/or debris from a liquid flow. More in general, the invention relates to heating and/or cooling systems.

### BACKGROUND TO THE INVENTION

Heating and/or cooling systems are known per se. Many of these systems include a closed circuit comprising a heating and/or cooling medium, such as a liquid. In these systems, gas may be present within the closed circuit. The gas may be free gas, e.g. bubbles or gas heads within components in the closed circuit, or gas dissolved in the liquid heating and/or cooling medium. It is preferred to remove the gas from the medium.

Heating and/or cooling systems are known which have a degassing device comprising a valve which is, e.g. manually, opened during maintenance for removing gas from the closed circuit. Also, automatic degassing devices are known, such as automatic micro-bubble degassing devices. A special class of degassing devices used in heating and/or cooling systems are gas-liquid vortex separators. These separators generate a vortex and rely on centrifugal forces to separate the gas from the liquid.

One such vortex separator is known from US 4,555,253 and is adapted to be connected in a closed liquid circulating system. The separator has an upright main body with an inlet pipe which directs the flow of water tangentially in the main body in a horizontal vortex. In the tangential flow bubbles form and rise to be purged from the flow. Below the point where bubbles form an outlet pipe is positioned in the main body for draining the water from the main body. It has been found, however, that the potential of such known vortex separator for removing micro-bubbles from the liquid leaves to be desired.

EP2445603B1 relates to a phase separator comprising a housing with a main inlet and a main outlet and one or more secondary outlets, the main inlet arranged for allowing the multiphase mixture to enter the phase separator and the main outlet arranged for allowing the treated multi-phase mixture to leave the phase separator, i.e. after separation of phase entities from the multi-phase mixture, the one or more secondary outlets arranged for allowing the separated phase entities to leave the phase separator, wherein the phase separator further comprises compartmentalization means.

### SUMMARY OF THE INVENTION

It is an object to provide a separator device with improved efficiency for separating gas and/or particles from the liquid flow.

Thereto is provided a separator device for separating a light fraction, such as gas and/or gas bubbles, and/or a heavy fraction, such as debris, from a liquid flow, according to claim 1. Although generally gas and/or gas bubbles and/or debris are to be separated in a heating and/or cooling system, the separator device can also be used for separating a light fraction, such as a liquid having a lower density than the main liquid, and/or a heavy fraction, such as a liquid having a higher density than the main liquid from the main liquid flow. The separator device includes a tubular member having a wall with an inlet and an outlet forming an internal space forming a liquid flow channel. The internal space includes a helical member for imparting a tangential velocity to liquid flowing through the tubular member. Hence a vortex is generated in the liquid flow channel. The separator device further includes at least one separator channel for removing debris and/or gas and/or gas bubbles from the liquid flow channel. The at least one separator channel is in communication with the liquid flow channel along at least part of a length of the helical member.

The tangential velocity causes the bubbles to migrate towards the axis of the vortex. Therefore, the gas bubbles and/or liquid containing bubbles can be drained from the tubular body via the separator channel when it is positioned at or near the center tubular body. Additionally, or alternatively, the tangential velocity causes the particles having a density higher than that of the liquid to migrate away from the axis of the vortex towards the wall of the tubular body. Therefore, the particles and/or liquid containing particles can be drained from the tubular body via the separator channel when it is positioned at the wall of the tubular body.

The wall of the tubular member includes at least one debris opening at said at least part of the length of the helical member for allowing debris to leave the liquid flow channel. The at least one debris opening can be positioned along substantially the entire circumference of the wall. The separator device can include a debris conduit in communication with the at least one debris opening for guiding debris away from the liquid flow channel. The debris conduit can extend from the wall in a downward direction.

Alternatively, or additionally, the internal space of the tubular member includes a hollow body. The helical member can be disposed between the hollow body and the wall. The hollow body can include at least one bubble opening at said at least part of the length of the helical member for allowing bubbles to leave the liquid flow channel. The at least one bubble opening can be positioned along substantially the entire circumference of the hollow body. The separator device can include a bubble conduit in communication with the at least one bubble opening for guiding bubbles away from the liquid flow channel. The bubble conduit can extend from the hollow body in an upward direction.

Optionally, a diameter of the hollow body increases in downstream direction. This helps in increasing the tangential velocity of the vortex relative to the axial velocity.

The at least one separator channel being in communication with the liquid flow channel along at least part of a length of the helical member, e.g. the at least one debris opening being positioned in the wall at the location of the helical member, or the at least one bubble opening being positioned in a surface of the hollow body at the location of the helical member, provides the advantage that the tangential speed of vortex not yet decaying as would be the case if the at least one separator channel would be in communication with the liquid flow channel downstream of the helical member.

Optionally, the at least one bubble opening is positioned at least partially downstream of the at least one debris opening. This provides the advantage that the draining of the debris, or liquid containing the debris from the liquid flow channel causes a drop in pressure which causes additional bubble generation and/or bubble growth. Hence, the at least one bubble opening being positioned at least partially downstream of the at least one debris opening causes enhanced gas separation via the bubble opening.

The tubular member includes a return opening for allowing liquid that exited the liquid flow channel via the at least one separator channel to re-enter the liquid flow channel. As liquid containing debris and/or liquid containing bubbles is drained from the liquid flow channel, the debris and/or bubbles can accumulate downstream of the at least one separator channel. Thus, liquid can exit the liquid flow path via the debris opening and/or the bubble opening. The liquid that exits the liquid flow channel can flow into a draining zone. The draining zone can be positioned outside the liquid flow channel. The draining zone can e.g. be a calm zone. In the calm zone flow speed of the liquid may be slower than in the liquid flow channel. In the draining zone the debris can settle, e.g. at or near a bottom of the draining zone. In the draining zone bubbles can accumulate, e.g. in a head of the draining zone. From the draining zone, the liquid can flow back into the liquid flow channel. The liquid can flow back from the draining zone into the liquid flow channel via the return opening. The liquid that exited the liquid flow channel can be fed back into the liquid flow channel via the return opening so as to maintain flow through the at least one separator channel. Optionally, the return opening is positioned downstream of the helical member.

The return opening is separate from the debris opening and/or the bubble opening. The return opening can be separate from the debris opening and from the bubble opening. The return opening can be positioned upstream or downstream of the debris opening and/or the bubble opening. It will be appreciated that a plurality of return openings may be provided. In examples the return opening is separated from the debris opening. In examples the return opening is separated from the bubble opening. The return opening can be spaced from the debris opening and/or the bubble opening. The debris opening forms an opening in the wall of the tubular member. The bubble opening forms an opening in the wall of the tubular member. The return opening forms an opening in the wall of the tubular member. The return opening can be spaced from the debris opening and/or the bubble opening in an axial direction of the tubular member. The return opening can be spaced from the debris opening and/or the bubble opening in an axial direction of the tubular member. The return opening can be spaced from the debris opening and/or the bubble opening in a radial direction of the tubular member. The return opening is provided as a circumferential slit in the tubular member, wherein the tubular member includes a tapered section upstream of the slit.

This provides the advantage of decreasing liquid pressure at the downstream side of the at least one separator channel. This may aid in further degassing the liquid and/or in preventing backflow through the at least one separator channel.

Optionally, the separator device includes a housing, wherein at least part of the tubular member being in communication with the separator channel is included inside the housing. Hence liquid including bubbles an/or debris can flow into the housing from the separator channel. The bubbles and/or debris can accumulate in the housing. The liquid flowing into the housing can return to the liquid flow channel via the return opening.

Optionally, the separator device including, e.g. within the housing, a calm zone for allowing debris to settle. The calm zone may be in communication with a debris drain port for, e.g. periodically, draining accumulated debris from the separator device.

Optionally, the separator device includes a magnet device for retaining magnetic debris. The magnet device can e.g. be positioned against the housing, e.g. at least partially surrounding the housing. The magnet device can be removable to as to retain magnetic particles when present, and to allow magnetic particles to be drained when removed.

Optionally, the separator device includes a head for gas to accumulate. Optionally, the separator device includes an air vent arranged for allowing gas to escape the separator device and for preventing liquid from escaping through the air vent.

Optionally, the helical member is arranged so as to generate an axial flow with a tangential velocity component along an axial direction of the tubular member. It has been found that the separator device in which the flow direction of the fluid is axially into, through, and out of a tubular body, i.e. substantially straight-through, introduces much less flow restriction than a vortex in which the flow changes flow direction as in the prior art.

The helical member efficiently generates the vortex imparting a tangential velocity to the axial flow. The higher the tangential velocity relative to the axial velocity, the higher the pressure gradient from the axis to the wall, and the higher the efficiency of removing gas and/or particles from the liquid. The higher the helix angle, however, the higher the flow resistance, and the lower the efficiency for removing gas and/or particles from the liquid. Herein the helix angle is defined as the angle between the helix and an axial line on its circumscribing axial cylinder or cone. Optionally the helical member has a helix angle of 30 - 85 degrees, preferably 45 - 75 degrees. When the helix angle is approximately 72 degrees, the pitch of the helix is about equal to the diameter of the helix, and the tangential velocity is about three times the axial velocity. When the helix angle is approximately 46 degrees, the pitch of the helix is about three times the diameter of the helix, and the tangential velocity is about equal to the axial velocity.

Optionally, the pitch of the helical member is not constant. Optionally, the pitch of the helical member decreases in downstream direction of the helical member. This provides the advantage that the pressure drop due to the presence of the helical member can be reduced. Optionally, the pitch decreases parabolically. It will be appreciated that when the pitch decreases the helix angle increases. Therefore, optionally the helical member has a helix angle that increases in the downstream direction of the helix. Preferably, the helix angle at the upstream side of the helical member is 0 - 30 degrees, more preferably 0 - 15 degrees. Preferably the helix angle at the downstream side of the helical member is 30 - 85 degrees, more preferably 45 - 80 degrees. In an embodiment, the helix angle can for instance change from 5 at the upstream side to 76 degrees at the downstream side.

Optionally, the tubular body at a location of the helical member has a diameter larger than the diameter of the inlet. This allows for less pressure loss (smaller flow resistance) at larger helix angles.

According to an aspect is provided a heating and/or cooling system including a separator device as described above. This provides the advantage that gas bubbles and/or debris can efficiently be removed from the liquid of the heating and/or cooling system. The heating and/or cooling system can include a closed liquid circuit. In the closed liquid circuit a heating and/or cooling liquid circulates. The system can include a heater device, a pump and a radiator. In use, the heating liquid can be heated in the heater device and pumped to the radiator for heating a surroundings of the radiator. The system can include a cooling device a pump and a heat exchanger. In use, the cooling liquid can be cooled in the cooling device and pumped to the heat exchanger for cooling a surroundings of the heat exchanger.

According to an aspect is provided a method for separating gas bubbles and/or debris from a liquid flow. The method includes routing a liquid flow through a tubular member having a wall with an inlet and an outlet forming an internal space forming a liquid flow channel, the internal space including a helical member so as to impart a tangential velocity to the liquid flowing through the tubular member. The method includes draining a portion of the liquid containing debris and/or gas bubbles from the liquid flow channel via at least one separator channel which is in communication with the liquid flow channel along at least part of a length of the helical member.

It will be appreciated that any of the aspects, features and options described in view of the separator device apply equally to the system and the described method. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic cross sectional view of a separator device not according to claim 1;
Fig. 2 shows a schematic cross sectional view of a separator device;
Fig. 3 shows a schematic cross sectional view of a separator device not according to claim 1; and
Fig. 4 shows a schematic cross sectional view of a separator device not according to claim 1.

### DETAILED DESCRIPTION

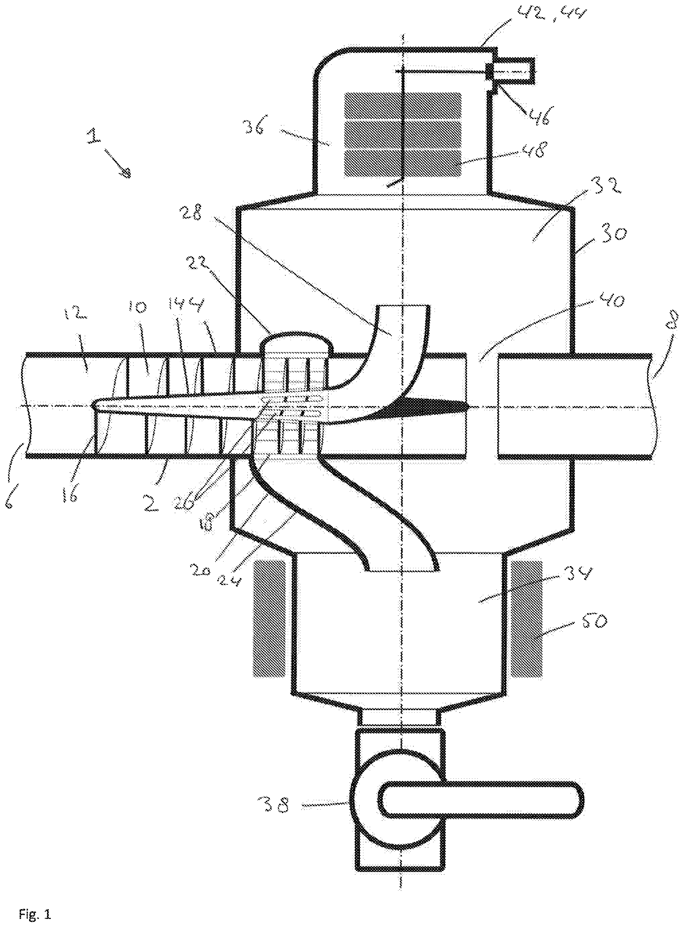

Figure 1 is an example of a schematic cross sectional view of a separator device 1, not according to claim 1. The separator device 1 includes a tubular member 2. The tubular member 2 includes a wall 4. The tubular member 2 includes an inlet 6 and an outlet 8. The tubular member 2 has an internal space 10. The tubular member forms a liquid flow channel 12. In use liquid is fed to the separator device 1 at the inlet 6 and the liquid leaves the separator device 1 at the outlet 8.

In this example the tubular member 2 includes a hollow body 14. Here the hollow body 14 is positioned coaxially with the wall 4. In this example a diameter of the hollow body increases in a direction from the inlet 6 to the outlet 8.

The tubular member 2 includes a helical member 16. Here an outer circumference of the helical member 16 abuts against an inner side of the wall 4. Here an inner circumference of the helical member 16 abuts against the hollow member 14. The helical member 16 can be attached to the wall 4 and/or the hollow member 14. The helical member 16 can be made unitary with the wall 4 and/or the hollow member 14. When liquid flows through the tubular member 2 from the inlet 6 to the outlet 8, the helical member 16 imparts a tangential velocity component to the liquid.

Here the helical member 16 is wound around an axis that is collinear with an axis of the tubular member 2 from the inlet 6 to the outlet 8. Hence, the helical member 16 generates an axial flow with a tangential velocity component along an axial direction of the tubular member 2.

In Figure 1 the wall 4 of the tubular member 2 includes a debris opening 18. The debris opening 18 is positioned in the wall 4 at a location where the helical member 16 is present within the tubular member 2. Hence, in this example the debris opening 18 is not positioned downstream of the helical member 16. In this example the debris opening 18 is not positioned upstream of the helical member 16. Advantageously the debris opening 18 is positioned at an axial distance from the upstream end of the helical member 16. For instance, the debris opening 18 is positioned in the downstream half of the axial length of the helical member 16. In this example an extent of the debris opening 18 in the axial direction of the helical member 16 is smaller than the axial extent of the helical member 16. Here the extent of the debris opening 18 in the axial direction of the helical member 16 is about one third of the axial extent of the helical member 16, however other extent ratios are possible.

Here the debris opening 18 extends along the entire circumference of the tubular member 2. It will be appreciated that it is also possible that the debris opening 18 extends along a portion of the circumference of the tubular member 2. It is also possible that a plurality of debris openings is provided.

A debris conduit 20 is placed in communication with the debris opening 18. In this example the debris conduit 20 includes a sleeve portion 22. The sleeve portion 22 surrounds the tubular member 2. The debris conduit further includes a debris pipe 24. In this example the debris pipe 24 extends from the tubular member in a downward direction.

In Figure 1 the hollow member 14 includes a bubble opening 26. The bubble opening 26 is positioned in the hollow member 14 at a location where the helical member 16 surrounds the hollow member 14. Hence, in this example the bubble opening 26 is not positioned downstream of the helical member 16. In this example the bubble opening 26 is not positioned upstream of the helical member 16. Advantageously the bubble opening 26 is positioned at an axial distance from the upstream end of the helical member 16. For instance, the bubble opening 26 is positioned in the downstream half of the axial length of the helical member 16. In this example an extent of the bubble opening 26 in the axial direction of the helical member 16 is smaller than the axial extent of the helical member 16. Here the extent of the bubble opening 26 in the axial direction of the helical member 16 is about one third of the axial extent of the helical member 16, however other extent ratios are possible.

Here a plurality of bubble openings 26 is provided. It will be appreciated that it is also possible that a single bubble opening 26 is provided. The bubble opening 26 can extends along the part of the circumference of the hollow member 14. It is also possible that the bubble opening 26 extends along the entire circumference of the hollow member 14.

A bubble conduit 28 is placed in communication with the bubble opening 26. In this example the bubble conduit 28 is a prolongation of the hollow member 14. In this example the bubble conduit 28 extends from the hollow member 14 in an upward direction.

The separator device 1 in Figure 1 further includes a housing 30. The housing has an inner space 32. In tis example the tubular member 4 extends through the inner space 32 of the housing 30. The housing 30 includes a calm zone 34. The housing 30 includes a head 36 for gas to accumulate.

The separator device 1 as described up to this point can be used as follows.

The separator device is included in a liquid flow path. Liquid containing debris and/or gas enters the separator device 1 via the inlet 6. The liquid flow encounters the helical member 16 and a tangential velocity component is imparted to the liquid flow. The tangential velocity component causes debris particles that are heavier than the liquid to migrate towards the wall 4. The tangential velocity component causes gas bubbles that are lighter than the liquid to migrate towards the hollow member 14.

At the debris opening 18 liquid containing debris exits the tubular member 2 and enters the debris conduit 20. The liquid containing debris is guided by the debris conduit 20 to the calm zone 34. In the calm zone 34 debris is allowed to settle. The separator device 1 can include a debris drain port 38. The drain port 38 can be opened, e.g. periodically or at will, for draining the debris from the separator device 1. While the debris settles in the calm zone 34, the liquid that carried the debris to the calm zone 34 is allowed to re-enter the tubular member 2 via a return opening 40. The liquid can then exit the separator device via the outlet 8.

It will be appreciated that in this example the debris opening 18 forms an opening in the wall 4 of the tubular member 2, the bubble openings 26 form openings in the wall 4 of the tubular member 2, and the return opening 40 forms an opening in the wall 4 of the tubular member 2. In this example, the debris opening 18, the bubble openings 26, and the return opening 40 are distinct openings. Here, the return opening 40 is be spaced from the debris opening 18 and the bubble openings 26 in an axial direction of the tubular member 2. In this example the return opening 40 is positioned downstream of the debris opening 18 and the bubble openings 26. It will be appreciated that the return opening 40 can also be positioned upstream of the debris opening 18 and/or the bubble openings 26. It will be appreciated that a plurality of return openings 40 may be provided, e.g. both upstream and downstream of the debris opening and/or bubble openings.

At the bubble opening 26 liquid containing gas and/or gas bubbles exits the tubular member 2 and enters the bubble conduit 28. It is noted that the vortex creates a reduced liquid pressure near the center of the vortex, i.e. near the hollow member 14. This reduced pressure is beneficial for gas separation. The reduced pressure may assist bubble generation and/or bubble growth. The liquid containing gas and/or bubbles is guided by the bubble conduit 28 to the head 36. In the head 36 gas is allowed to accumulate. The separator device 1 can include a gas vent 42 for allowing gas to be drained from the separator device 1. In this example, the gas vent 42 is an automatic degasser 44. The automatic degasser includes a valve 46 and a float 48. If a sufficient amount of gas has accumulated in the head 36, the liquid level in the head 36 lowers, the float 48 lowers, and the calve 46 is opened. If gas exits the separator device 1 via the valve 46 the water level in the head 36 will rise again, the float 48 will be raised and the valve 46 will be closed. Hence, the air vent 42 allows gas to escape the separator device 1 and prevents liquid from escaping through the air vent 42. The liquid that carried the gas bubbles to head 36 is allowed to re-enter the tubular member 2 via the return opening 40. The liquid can then exit the separator device via the outlet 8.

In the example of Figure 1, the separator device 1 further includes a magnet device 50. The magnet device 50 here includes one or more magnets that can be attached to the housing 30. Here the magnet device 50 can be clamped onto the housing 30 surrounding the calm zone 34. The magnetic device 50 provides a magnetic field inside the housing 30 for retaining magnetic debris. The magnetic device 50 can be removed for allowing the magnetic debris to be drained from the separator device 1.

It is noted that in the example of Figure 1 the debris opening 18 and the bubble opening 26 are positioned in overlap at a common part of the helical member 16. Hence, at the same position in the liquid flow debris and gas bubbles are removed from the tubular member 2.

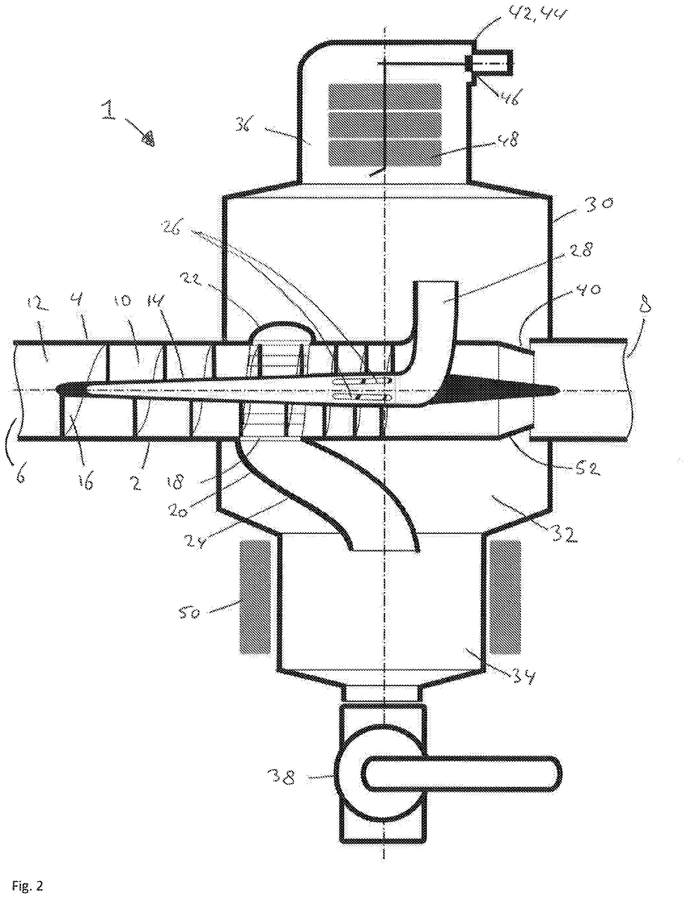

Figure 2 shows an example of a schematic cross sectional view of a separator device 1. The separator device of Figure 2 is highly similar to the separator device 1 described in view of Figure 1.

It is noted that in the example of Figure 2 the debris opening 18 and the bubble opening 26 are axially offset with respect to each other. The bubble opening 26 is positioned downstream of the debris opening 18. The draining of liquid containing debris from the tubular member 2 through the debris opening 18 may result in a reduced liquid pressure at the location of the debris opening 18. This reduced pressure can improve gas separation, e.g. bubble generation and/or bubble growth in the vortex. Positioning the bubble opening 26 downstream of the debris opening 18 can allow to take advantage of this effect so as to remove more gas from the liquid flow in the tubular member 2.

In the example of Figure 2 the return opening 40 is embodied as a venturi. Here the return opening is provided as a circumferential slit in the tubular member 2, wherein the tubular member 2 includes a tapered section 52 upstream of the slit. The venturi causes a decrease of liquid pressure in the housing 30 relative to the liquid pressure in the tubular member 2. This may aid in preventing a backflow of liquid from the return opening 40 via the inner space 32 of the housing 32 through the bubble conduit 28 into the tubular member 2. Such backflow could reduce the potential for removing gas from the liquid flow. It will be appreciated that the venturi may also be used in the separator device 1 of Figure 1.

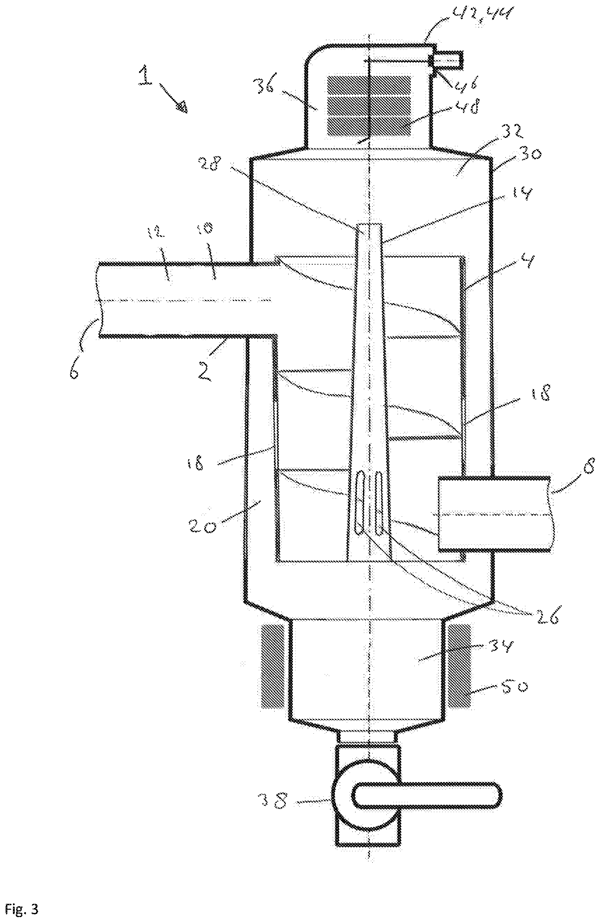

Figure 3 shows an example of a schematic cross sectional view of a separator device 1 not according to claim 1. The separator device of Figure 3 is highly similar to the separator devices described in Figures 1 and 2. The main difference is that in the example of Figure 3 the helical member 16 is oriented wound around an axis that is substantially perpendicular to flow direction from the inlet 6 to the outlet 8.

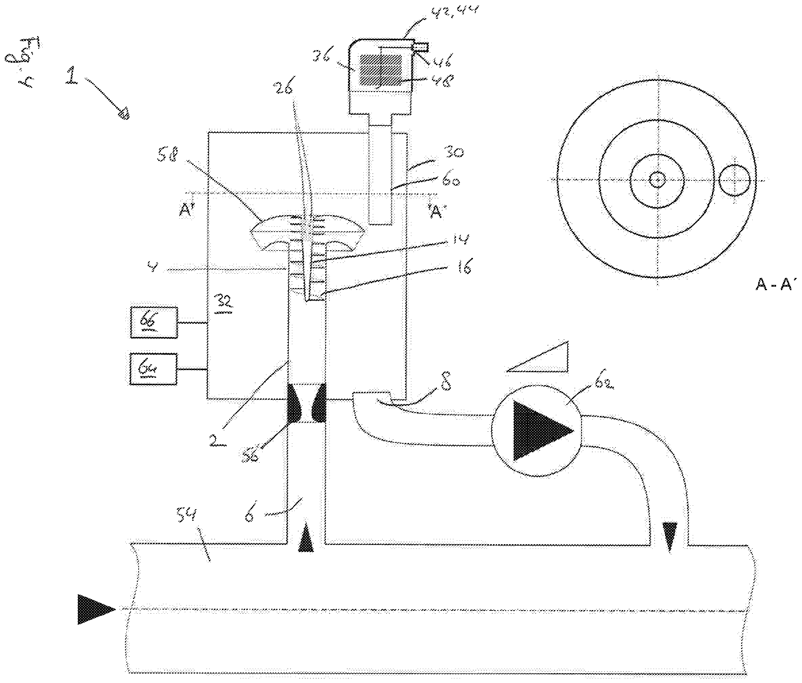

Figure 4 shows an example of a schematic cross sectional view of a separator device not according to claim 1. In the example of Figure 4 the separator device is arranged for separating gas from the liquid flow. Liquid from a main flow 54 enters the tubular member 2 via the inlet 6. Here the tubular member includes a restriction 56. The restriction 56 can be a venturi. The restriction 56 reduces the liquid pressure, e.g. to vapor pressure level. From the restriction 56 the liquid flows to the helical member 16 and a tangential velocity component is imparted to the liquid flow. Liquid including gas bubbles flows through the bubble openings 26 in the hollow member 14. The remainder of the liquid flow flows into the inner space 32 of the housing 30. Here the liquid having the tangential velocity component is forced into a downward outward motion by the cap 58. Gas collected in the inner space 32 leaves the inner space via riser pipe 60 and is ejected by the gas vent 42 as described above. It will be appreciated that gas will only flow into the riser pipe 60 once a liquid level inside the inner space is below the entrance of the riser pipe 60.

Degassed liquid leaves the housing 30 via the outlet 8. Here a pump 62 is placed in a conduit connecting the outlet 8 with the main flow 54. A functioning of the pump can be controlled. For example a frequency, rotation speed and/or throughput of the pump 62 can be controlled. The pump 62 can be controlled on the basis of a sensor signal. The sensor signal can e.g. be a liquid pressure in the inner space 32, e.g. measured by a pressure sensor 64. Alternatively, or additionally, the sensor signal can be a filling level of the inner space 32, e.g. measured by a level sensor 66.

Herein, the invention is described with reference to specific examples of embodiments of the invention. It will, however, be evident that various modifications and changes may be made therein, without departing from the essence of the invention as defined in the appended claims. For the purpose of clarity and a concise description features are described herein as part of the same or separate embodiments, however, alternative embodiments having combinations of all or some of the features described in these separate embodiments are also envisaged.

In this examples the separator device includes a single helical member. It will be appreciated that it is also possible that the separator device includes a plurality of helical members. The plurality of helical members can be intertwined. For example, the separator device can include two, three or four helical members.

In the examples a pitch of the helical member decreases in downstream direction of the helical member. This provides the advantage that the pressure drop due to the presence of the helical member can be reduced. In the examples the pitch decreases parabolically.

The helical member efficiently generates the vortex by imparting the tangential velocity to the axial flow. The higher the tangential velocity relative to the axial velocity, the higher the pressure gradient from the axis to the wall, and the higher the efficiency of removing gas and/or particles from the liquid. The higher the helix angle, however, the higher the flow resistance, and the lower the efficiency for removing gas and/or particles from the liquid. Herein the helix angle ϕ is defined as the angle between the helix and an axial line on its circumscribing axial cylinder or cone. The helix angle may be about 5 degrees at the upstream extremity, and about 76 degrees at the downstream extremity of the helical member. More in general, the helix angle at the upstream side of the helical member is preferably 0 - 30 degrees, more preferably 0 - 15 degrees. Preferably the helix angle at the downstream side of the helical member is 30 - 85 degrees, more preferably 45 - 80 degrees.

In the example of Figure 2 the bubble opening is positioned downstream of the debris opening. It will be appreciated that it is also possible that the debris opening is positioned downstream of the bubble opening.

It is also possible to place a plurality of separator devices in series.

In the examples of Figures 1-3 the separator device is arranged for both separating gas and debris from the liquid flow in the tubular member. It will be appreciated that it is also possible that the separator device is only arranged for separating debris from the liquid flow. In that case, the bubble opening and bubble conduit can be omitted. Also the hollow member can be omitted, or need not be hollow. It will be appreciated that it is also possible that the separator device is only arranged for separating gas from the liquid flow. In that case the debris opening and debris conduit can be omitted.

It is possible that the tubular member, downstream of the helical member includes means, such as fins, for reducing the tangential velocity of the liquid flow.

The separator device can be used in a heating and/or cooling system. This provides the advantage that gas and/or debris can efficiently be removed from the liquid of the heating and/or cooling system. The heating and/or cooling system can include a closed liquid circuit. In the closed liquid circuit a heating and/or cooling liquid circulates. The system can include a heater device, a pump and a radiator. In use, the heating liquid can be heated in the heater device and pumped to the radiator for heating a surroundings of the radiator. The system can include a cooling device a pump and a heat exchanger. In use, the cooling liquid can be cooled in the cooling device and pumped to the heat exchanger for cooling a surroundings of the heat exchanger. The separator device can be included in the main liquid circulation. The separator device can also be included in a by pass channel of the liquid circuit.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. Separator device (1) for separating a light fraction, such as gas bubbles, and/or a heavy fraction, such as debris, from a liquid flow, including
a tubular member (2) having a wall (4) with an inlet (6) and an outlet (8) forming an internal space (10) forming a liquid flow channel (12),
the internal space (10) including a helical member (16) for imparting a tangential velocity to liquid flowing through the tubular member (2),
wherein the separator device (1) further includes at least one separator channel for removing debris and/or gas bubbles from the liquid flow channel, the at least one separator channel being in communication with the liquid flow channel along at least part of a length of the helical member (16),
wherein a) the wall (4) of the tubular member (2) includes at least one debris opening (18) at said at least part of the length of the helical member (16) for allowing debris to leave the liquid flow channel (12), and/or b) the internal space (10) includes a hollow body (14), the helical member (16) being disposed between the hollow body (14) and the wall (4), wherein the hollow body (14) includes at least one bubble opening (26) at said at least part of the length of the helical member (16) for allowing bubbles to leave the liquid flow channel (12),
wherein the tubular member (2) includes a return opening (40) separate from the at least one debris opening (18) and/or the at least one bubble opening (26) for allowing liquid that exited the liquid flow channel (12) via the at least one separator channel to re-enter the liquid flow channel,
wherein the return opening (40) is provided as a circumferential slit in the tubular member, wherein the tubular member includes a tapered section (52) upstream of the slit.

2. Separator device (1) according to claim 1, at least including the at least one bubble opening (26) and the at least one debris opening (18), wherein the at least one bubble opening (26) is positioned at least partially downstream of the at least one debris opening (18).

3. Separator device (1) according to claim 1 or 2, at least including the at least one debris opening (18), including a debris conduit (20) in communication with the at least one debris opening for guiding debris away from the liquid flow channel (12).

4. Separator device (1) according to claim 1, 2 or 3, at least including the at least one bubble opening (26), including a bubble conduit (28) in communication with the at least one bubble opening for guiding bubbles away from the liquid flow channel (12).

5. Separator device (1) according to any one of the preceding claims, further including a housing (30), wherein at least part of the tubular member (2) being in communication with the separator channel is included inside the housing.

6. Separator device (1) according to any one of the preceding claims, further including a calm zone (34) for allowing debris to settle.

7. Separator device (1) according to any one of the preceding claims, at least including the at least one debris opening (18), including a magnet device (50) for retaining magnetic debris.

8. Separator device (1) according to any one of the preceding claims, including a head (36) for gas to accumulate.

9. Separator device (1) according to any one of the preceding claims, including an air vent (42) arranged for allowing gas to escape the separator device and for preventing liquid from escaping through the air vent.

10. Heating and/or cooling system including a separator device (1) according to any one of claims 1-9.

11. Method for separating gas bubbles and/or debris from a liquid flow, including
- routing a liquid flow through a tubular member (2) having a wall (4) with an inlet (6) and an outlet (8) forming an internal space (10) forming a liquid flow channel (12), the internal space including a helical member (16) so as to impart a tangential velocity to the liquid flowing through the tubular member,
- draining a portion of the liquid containing debris and/or gas bubbles from the liquid flow channel via at least one separator channel which is in communication with the liquid flow channel along at least part of a length of the helical member via a) at least one debris opening (18) in the wall (4) of the tubular member (2) at said at least part of the length of the helical member (16) for allowing debris to leave the liquid flow channel, and/or b) via at least one bubble opening (26) in a hollow body (14) included in the internal space (10), the helical member (16) being disposed between the hollow body (14) and the wall (4), wherein the at least one bubble opening (26) is disposed in the hollow body (14) at said at least part of the length of the helical member (16) for allowing bubbles to leave the liquid flow channel (12),
- allowing liquid that exited the liquid flow channel (12) via the at least one separator channel to re-enter the liquid flow channel via a return opening (40) of the tubular member separate from the at least one debris opening (18) and/or the at least one bubble opening (26), wherein the return opening (40) is provided as a circumferential slit in the tubular member, wherein the tubular member includes a tapered section (52) upstream of the slit.

## Patentansprüche

1. Trennvorrichtung (1) zur Abtrennung einer leichten Fraktion, wie Gasblasen, und/oder einer schweren Fraktion, wie Schmutzpartikel, aus einer Flüssigkeitsströmung, einschließlich
eines rohrförmigen Elements (2), das eine Wand (4) mit einem Einlass (6) und einem Auslass (8) aufweist, die einen Innenraum (10) bildet, der einen Flüssigkeitsströmungskanal (12) bildet,
wobei der Innenraum (10) ein schraubenförmiges Element (16) aufweist, um der Flüssigkeit, die durch das rohrförmige Element (2) fließt, eine Tangentialgeschwindigkeit zu verleihen,
wobei die Trennvorrichtung (1) ferner mindestens einen Trennkanal zum Entfernen von Schmutzpartikeln und/oder Gasblasen aus dem Flüssigkeitsströmungskanal enthält, wobei der mindestens eine Trennkanal mit dem Flüssigkeitsströmungskanal entlang mindestens eines Teils einer Länge des schraubenförmigen Elements (16) in Verbindung steht,
wobei a) die Wand (4) des rohrförmigen Elements (2) mindestens eine Schmutzpartikelöffnung (18) an dem mindestens einen Teil der Länge des schraubenförmigen Elements (16) enthält, damit Schmutzpartikel den Flüssigkeitsströmungskanal (12) verlassen können, und/oder b) der Innenraum (10) einen Hohlkörper (14) enthält, wobei das schraubenförmige Element (16) zwischen dem Hohlkörper (14) und der Wand (4) angeordnet ist, wobei der Hohlkörper (14) mindestens eine Blasenöffnung (26) an dem mindestens einen Teil der Länge des schraubenförmigen Elements (16) enthält, damit Blasen den Flüssigkeitsströmungskanal (12) verlassen können,
wobei das röhrenförmige Element (2) eine von der mindestens einen Schmutzpartikelöffnung (18) und/oder der mindestens einen Blasenöffnung (26) getrennte Rücklauföffnung (40) enthält, damit Flüssigkeit, die den Flüssigkeitsströmungskanal (12) über den mindestens einen Trennkanal verlassen hat, wieder in den Flüssigkeitsströmungskanal eintreten kann,
wobei die Rücklauföffnung (40) als ein umfangsmäßig verlaufender Schlitz in dem rohrförmigen Element vorgesehen ist, wobei das rohrförmige Element einen sich verjüngenden Abschnitt (52) stromaufwärts des Schlitzes enthält.

2. Trennvorrichtung (1) nach Anspruch 1, zumindest einschließlich der mindestens einen Blasenöffnung (26) und der mindestens einen Schmutzpartikelöffnung (18), wobei die mindestens eine Blasenöffnung (26) zumindest teilweise stromabwärts der mindestens einen Schmutzpartikelöffnung (18) positioniert ist.

3. Trennvorrichtung (1) nach Anspruch 1 oder 2, zumindest einschließlich der mindestens einen Schmutzpartikelöffnung (18), einschließlich einer Schmutzpartikelleitung (20), die mit der mindestens einen Schmutzpartikelöffnung in Verbindung steht, um Schmutzpartikel aus dem Flüssigkeitsströmungskanal (12) wegzuführen.

4. Trennvorrichtung (1) nach Anspruch 1, 2 oder 3, zumindest einschließlich der mindestens einen Blasenöffnung (26), einschließlich einer Blasenleitung (28), die mit der mindestens einen Blasenöffnung in Verbindung steht, um Blasen aus dem Flüssigkeitsströmungskanal (12) wegzuführen.

5. Trennvorrichtung (1) nach einem der vorstehenden Ansprüche, die ferner ein Gehäuse (30) enthält, wobei zumindest ein Teil des rohrförmigen Elements (2), das mit dem Trennkanal in Verbindung steht, im Inneren des Gehäuses enthalten ist.

6. Trennvorrichtung (1) nach einem der vorstehenden Ansprüche, die ferner eine Ruhezone (34) enthält, in der sich Schmutzpartikel absetzen können.

7. Trennvorrichtung (1) nach einem der vorstehenden Ansprüche, zumindest einschließlich der mindestens einen Schmutzpartikelöffnung (18), die eine Magnetvorrichtung (50) zum Zurückhalten magnetischer Schmutzpartikel enthält.

8. Trennvorrichtung (1) nach einem der vorstehenden Ansprüche, die einen Kopf (36) zur Gasansammlung enthält.

9. Trennvorrichtung (1) nach einem der vorstehenden Ansprüche, die einen Luftauslass (42) enthält, der so angeordnet ist, dass Gas aus der Trennvorrichtung entweichen kann und dass verhindert wird, dass Flüssigkeit durch den Luftauslass entweicht.

10. Heiz- und/oder Kühlsystem mit einer Trennvorrichtung (1) nach einem der Ansprüche 1 bis 9.

11. Verfahren zur Abtrennung von Gasblasen und/oder Schmutzpartikeln aus einer Flüssigkeitsströmung, einschließlich
- Leiten einer Flüssigkeitsströmung durch ein rohrförmiges Element (2), das eine Wand (4) mit einem Einlass (6) und einem Auslass (8) aufweist, die einen Innenraum (10) bildet, der einen Flüssigkeitsströmungskanal (12) bildet, wobei der Innenraum ein schraubenförmiges Element (16) aufweist, um der Flüssigkeit, die durch das rohrförmige Element fließt, eine Tangentialgeschwindigkeit zu verleihen,
- Ablassen eines Teils der Flüssigkeit, die Schmutzpartikel und/oder Gasblasen enthält, aus dem Flüssigkeitsströmungskanal über mindestens einen Trennkanal, der mit dem Flüssigkeitsströmungskanal entlang mindestens eines Teils der Länge des spiralförmigen Elements in Verbindung steht, über a) mindestens eine Schmutzpartikelöffnung (18) in der Wand (4) des rohrförmigen Elements (2) auf mindestens einem Teil der Länge des schraubenförmigen Elements (16), damit Schmutzpartikel den Flüssigkeitsstromkanal verlassen können, und/oder b) über mindestens eine Blasenöffnung (26) in einem Hohlkörper (14), der in dem Innenraum (10) enthalten ist, wobei das schraubenförmige Element (16) zwischen dem Hohlkörper (14) und der Wand (4) angeordnet ist, wobei die mindestens eine Blasenöffnung (26) in dem Hohlkörper (14) an dem mindestens einen Teil der Länge des schraubenförmigen Elements (16) angeordnet ist, damit Blasen den Flüssigkeitsströmungskanal (12) verlassen können,
- Ermöglichen, dass Flüssigkeit, die den Flüssigkeitsströmungskanal (12) über den mindestens einen Trennkanal verlassen hat, wieder in den Flüssigkeitsströmungskanal über eine Rücklauföffnung (40) des röhrenförmigen Elements getrennt von der mindestens einen Schmutzpartikelöffnung (18) und/oder der mindestens einen Blasenöffnung (26) eintritt, wobei die Rücklauföffnung (40) als ein umfangsmäßig verlaufender Schlitz in dem röhrenförmigen Element vorgesehen ist, wobei das röhrenförmige Element einen sich verjüngenden Abschnitt (52) stromaufwärts des Schlitzes enthält.

## Revendications

1. Dispositif séparateur (1) pour séparer une fraction légère, telle que des bulles de gaz, et/ou une fraction lourde, telle que des débris, d'un flux liquide, comprenant
un élément tubulaire (2) comportant une paroi (4) avec une entrée (6) et une sortie (8) formant un espace interne (10) formant un canal d'écoulement de liquide (12),
l'espace interne (10) comprenant un élément hélicoïdal (16) pour conférer une vitesse tangentielle au liquide s'écoulant à travers l'élément tubulaire (2),
dans lequel le dispositif séparateur (1) comprend en outre au moins un canal séparateur pour éliminer les débris et/ou les bulles de gaz du canal d'écoulement de liquide, le au moins un canal séparateur étant en communication avec le canal d'écoulement de liquide sur au moins une partie d'une longueur de l'élément hélicoïdal (16),
dans lequel a) la paroi (4) de l'élément tubulaire (2) comprend l'au moins une ouverture pour débris (18) au niveau de ladite au moins une partie de la longueur de l'élément hélicoïdal (16) pour permettre aux débris de quitter le canal d'écoulement de liquide (12). ), et/ou b) l'espace interne (10) comprend un corps creux (14), l'élément hélicoïdal (16) étant disposé entre le corps creux (14) et la paroi (4), le corps creux (14) comprend l'au moins une ouverture pour des bulles (26) au niveau de ladite au moins une partie de la longueur de l'élément hélicoïdal (16) pour permettre aux bulles de quitter le canal d'écoulement de liquide (12),
dans lequel l'élément tubulaire (2) comprend une ouverture de retour (40) séparée de la ou des ouvertures pour des débris (18) et/ou de la ou des ouvertures pour des bulles (26) pour permettre au liquide qui sort du canal d'écoulement de liquide (12) via le au moins un canal séparateur à réintégrer le canal d'écoulement de liquide,
dans lequel l'ouverture de retour (40) est prévue sous la forme d'une fente circonférentielle dans l'élément tubulaire, dans lequel l'élément tubulaire comprend une section conique (52) en amont de la fente.

2. Dispositif séparateur (1) selon la revendication 1, comprenant l'au moins une ouverture pour des bulles (26) et l'au moins une ouverture pour des débris (18), dans lequel l'au moins une ouverture pour des bulles (26) est positionnée au moins partiellement en aval de la ou des ouvertures pour des débris (18).

3. Dispositif séparateur (1) selon la revendication 1 ou 2, comprenant au moins la au moins une ouverture pour des débris (18), comprenant un conduit pour des débris (20) en communication avec la au moins une ouverture pour des débris pour guider les débris loin du canal d'écoulement de liquide (12).

4. Dispositif séparateur (1) selon la revendication 1, 2 ou 3, comprenant au moins la au moins une ouverture pour des bulles (26), comprenant un conduit pour des bulles (28) en communication avec la au moins une ouverture pour des bulles pour guider les bulles loin de le canal d'écoulement de liquide (12).

5. Dispositif séparateur (1) selon l'une quelconque des revendications précédentes, comprenant en outre un boîtier (30), dans lequel au moins une partie de l'élément tubulaire (2) étant en communication avec le canal séparateur est incluse à l'intérieur du boîtier.

6. Dispositif séparateur (1) selon l'une quelconque des revendications précédentes, comprenant en outre une zone calme (34) pour permettre aux débris de se déposer.

7. Dispositif séparateur (1) selon l'une quelconque des revendications précédentes, comprenant au moins la au moins une ouverture pour des débris (18), incluant un dispositif magnétique (50) pour retenir les débris magnétiques.

8. Dispositif séparateur (1) selon l'une quelconque des revendications précédentes, comportant une tête (36) d'accumulation de gaz.

9. Dispositif séparateur (1) selon l'une quelconque des revendications précédentes, comprenant une bouche d'aération (42) agencée pour permettre au gaz de s'échapper du dispositif séparateur et pour empêcher le liquide de s'échapper par la bouche d'aération.

10. Système de chauffage et/ou de refroidissement comprenant un dispositif séparateur (1) selon l'une quelconque des revendications 1 à 9.

11. Procédé pour séparer les bulles de gaz et/ou les débris d'un écoulement liquide, comprenant les étapes consistant à
- acheminer un flux de liquide à travers un élément tubulaire (2) comportant une paroi (4) avec une entrée (6) et une sortie (8) formant un espace interne (10) formant un canal d'écoulement de liquide (12), l'espace interne comprenant un élément hélicoïdal (16) de manière à conférer une vitesse tangentielle au liquide s'écoulant à travers l'élément tubulaire,
- drainer une partie du liquide contenant des débris et/ou des bulles de gaz du canal d'écoulement de liquide via au moins un canal séparateur qui est en communication avec le canal d'écoulement de liquide le long d'au moins une partie d'une longueur de l'élément hélicoïdal via a) au moins une ouverture pour des débris (18) dans la paroi (4) de l'élément tubulaire (2) au niveau de ladite au moins une partie de la longueur de l'élément hélicoïdal (16) pour permettre aux débris de quitter le canal d'écoulement de liquide, et/ou b) via au moins une ouverture pour des bulles (26) dans un corps creux (14) inclus dans l'espace interne (10), l'élément hélicoïdal (16) étant disposé entre le corps creux (14) et la paroi (4), dans lequel l'au moins une ouverture pour des bulles ('26) est disposée dans le corps creux (14) au niveau de ladite au moins une partie de la longueur de l'élément hélicoïdal (16) pour permettre aux bulles de quitter le canal d'écoulement de liquide (12),
permettre au liquide qui a quitté le canal d'écoulement de liquide (12) via ledit au moins un canal séparateur de rentrer dans le canal d'écoulement de liquide via une ouverture de retour (40) de l'élément tubulaire séparée de ladite au moins une ouverture pour débris (18) et/ ou la ou les ouvertures pour des bulles (26), l'ouverture de retour (40) étant prévue sous la forme d'une fente circonférentielle dans l'élément tubulaire, l'élément tubulaire comprenant une section conique (52) en amont de la fente.
